# EUROPEAN PATENT APPLICATION

(11) **EP 3 412 394 A1**
(43) Date of publication of application: **12.12.2018**
(21) Application number: 17869170.5
(22) Date of filing: 17.10.2017
(51) Int. Cl.: B23F 21/16

(54) **TOOL FOR MACHINING MODIFIED GEAR OF ROV THRUSTER**

(30) Priority: 08.11.2016 CN 201610981636
(71) Applicant: Tianjin Deepfar Ocean Technology Co., Ltd., Tianjin 300457 (CN)
(72) Inventor: WEI, Jiancang, Tianjin 300457 (CN); CUI, Chunhao, Tianjin 300457 (CN)
(74) Representative: ABG Intellectual Property, S.L.
(86) International application number: PCT/CN2017/106489
(87) International publication number: WO 2018/086441

(57) **Abstract**

Cutters for ROV propeller gear modification comprising cut holder, a hob provided on the cut holder and comprising a plurality of continuous linearly arranged hobbings. Each hobbing has a tooth depth of 1.65cm including a tooth dedendum of 0.975cm and a tooth addendum of 0.675cm, a tooth thickness of 0.946cm, an addendum circle radius of 0.324cm, a dedendum circle radius of 0.163cm and a dextrorotatory tooth thread with a lead angle of 1°7'18". Each two adjacent teeth have a pitch of 1.885cm. The hob has a modulus of 0.6, 12 slots, a pressure angle of 20°. A blade groove has a spiral angle of 0° with its spiral direction being a straight flute. A base circle radius of the hob is 0.823cm and a base circle lead angle is 20°1'49". The modified gear of ROV propeller is obtained by the hob processing.

## Description

This disclosure claims all benefits to Chinese patent application No. 201610981636.8, filed with the State Intellectual Property Office of the People's Republic of China on November 8, 2016, titled "Cutters for processing the modified gear of ROV propeller", and hereby incorporated by reference herein in its entirety.

### FIELD

This disclosure generally relates to ROV propeller, and more specifically to cutters for processing modified gear of a ROV propeller.

### BACKGROUND

ROV (Remote Operated Vehicle) is a robot used for underwater observation, inspection and construction. Miniature ROV is energy self-supported and can operate nimbly. It can carry miniature camera and sensor so as to extend the observation range for a manned submersible with its ability of accessing to small or dangerous places where it is inconvenient for the manned submersible or even unable to get into.

ROV is driven mainly by ROV propellers installed on both sides and the tail of the ROV respectively. A lot of gears are used in the ROV propeller, such as planetary wheel in planetary reducer, a solar wheel connected to the planet reducer in the ROV propulsion motor shaft, and gear rings provided on other connecting parts, etc. Gears used in a conventional ROV propeller are standard gears made according to industry standard. When gears are in engagement or disengagement, shock and noise will be caused due to gear tooth error and the angular velocity fluctuation change caused by loading deformation. It is difficult to avoid the generation of such phenomenon even for gears of high precision. In the past, people are strived to make the gear as much precise as possible to be close to the theoretical tooth shape. In practice, however, it has been proved that gears of high precision cannot meet the requirement of precise engagement during high speed overloading transmission, whereas a modification to the addendum, dedendum flange and the tooth orientation can improve the engaging performance effectively, reduce the engaging shock, reduce noise, and also render a uniform load distribution of gear width, thus increasing the bearing capacity of the gears.

### SUMMARY

In one aspect, the disclosure relates to cutters for ROV propeller gear modification, comprising a cut holder and a hob provided on the cut holder. The hob comprises a plurality of continuous linearly arranged gear hobbings, each of which has a tooth depth of 1.65cm, a tooth dedendum of 0.975cm, and a tooth addendum of 0.675cm, a tooth thickness of 0.946cm, an addendum circle radius of 0.324cm, a dedendum circle radius of 0.163cm, and a dextrorotatory tooth thread with an angle of 1°7'18", with two adjacent gear teeth having a tooth pitch of 1.885cm.

The modulus of hob may be 0.6, slot number may be 12, and the pressure angle may be 20°. A spiral angle of a blade groove may be 0°, and spiral direction may be formed as a straight flute; base circle radius may be 0.823cm, base rounded angle may be 20°1'49". The modified gear of ROV propeller may be obtained by the gear hobbing processing of the hob.

In some embodiments, the hob is made of hard alloy and the heat treatment hardness is HRC63-66. Chip pocket adjacent pitch difference may be 0.016cm. Chip pocket pitch cumulative error may be 0.02cm. Tooth profile error may be 0.003cm. Helix error of adjacent cutting edge may be 0.004cm. Helix error of one round cutting edge may be 0.006cm. Helix error of three rounds cutting edge may be 0.01cm.

In some embodiments, the ROV propeller modified gear obtained from the hob processing method has a modulus of 0.6, a pressure angle of 20°, a number of teeth of 12, each tooth has an addendum circle diameter of 8.16 mm, a dedendum circle diameter of 5.85 mm, and a dedendum of 1.130 mm. The product has an involute initial circle diameter of 6.767 mm. Each tooth has a left and a right surface of drum shape and its upper portion has a left end and a right end, both of which have an end edge which are inclined inwards by a preset angle.

In some embodiments, the ROV propeller modified gear obtained from the hob processing is fit for the solar and planetary wheels of the ROV propeller.

The cutter used for processing the ROV propeller gear modification provided by the present disclosure modifies edge of addendum and dedendum as well as tooth orientation of a traditional tooth. The modification changes gear meshing performance, makes gear running more smoothly, reduces noise and vibration of the gear, makes the load distribution along the tooth width more uniform, improves the carrying capacity and prolongs the working lifetime of the gear.

### BRIEF DESCRIPTION OF THE DRAWINGS

FIG. 1 is a schematic diagram of the cutter for processing the ROV propeller gear modification provided by an example of this disclosure.
FIG. 2 is a schematic diagram of a modified gear provided by an example of this disclosure.

### DETAILED DESCRIPTION

A further detailed description of the technical solutions in the disclosure will be provided through the following drawings and examples.

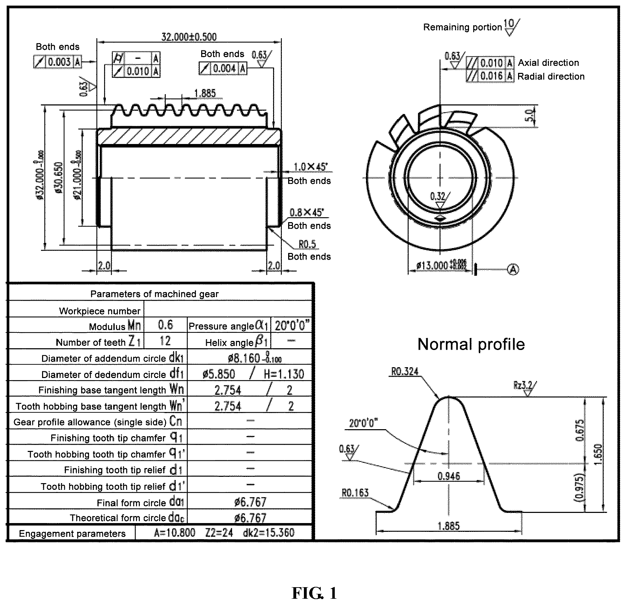

Referring to FIG. 1, the disclosure relates to a cutter for processing the modified gear of ROV propeller, comprising cut holder and a hob set on the cut holder. The hob comprises a plurality of continuously and linearly arranged gear hobbings. Each gear hobbing has a tooth depth of 1.65cm, a tooth dedendum of 0.975cm, and a tooth addendum of 0.675cm. Each gear hobbing has a tooth thickness of 0.946cm, an addendum circle radius of 0.324cm, and a dedendum circle radius of 0.163cm. Each tooth has a lead angle of 1°7'18", with the thread being dextrorotation. A tooth pitch between two adjacent gear teeth is 1.885cm.

The modulus of hob is 0.6, with 12 slots and a pressure angle of 20°. The spiral angle of blade groove is 0°, spiral orientation is formed as a straight flute. The base circle radius is 0.823cm, and the base rounded angle is 20°1'49". The modified gear of ROV propeller is obtained through processing by the hob gear hobbing.

This cutter for the ROV propeller gear modification as provided by the disclosure modifies the edge of tooth top and tooth root as well as tooth orientation of a traditional gear. The modification improves gear engaging performance, makes gear running more smoothly, reduces the noise and vibration, makes distribution of load along the tooth width uniformly, improves load capacity and prolongs the working lifetime of the gear.

In some embodiments, the hob is made of hard alloy and the heat treatment hardness is HRC63-66. It's chip pocket adjacent pitch difference is 0.016cm, chip pocket pitch cumulative error is 0.02cm, tooth profile error is 0.003cm, helix error of adjacent cutting edges is 0.004cm, helix error in one round of the cutting edge is 0.006cm, and helix error in three rounds of the cutting edge is 0.01cm.

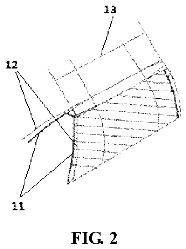

Referring to Fig. 2, in some embodiments, the ROV propeller modified gear obtained by the gear hob processing method has a modulus of 0.6 and a pressure angle of 20 degrees, with 12 teeth. Each tooth addendum circle has a diameter of 8.16 mm, a dedendum circle diameter of 5.85 mm, and a dedendum height of 1.130 mm. The product has a true involute form diameter of 6.767 mm. The left and the right tooth surface of each tooth are of drum shape, with the edge line of both left and right end of the upper portion of the tooth are respectively inclined inwardly by a preset angel.

It should be noted that reference sign 11 in FIG. 2 designates the gear profile after modification, reference sign 12 designates the gear profile before modification and 13 designates the tooth direction after modification.

After applying the modified gear to the ROV propeller motors and planetary reducer, the vibration of planetary reducer is very small, the noise is reduced (from more than 85 decibels before modification to 66- 70 decibels after modification) at a high speed rotation. In addition, the highest temperature of the planetary reducer reduces from 60 to 47°C as increasing of temperature caused by mechanical friction becomes slow.

In some embodiments, a modified gear of ROV propeller obtained from the gear hob processing method can be applied in the solar and planetary wheels of the ROV propeller.

A solar wheel which is subject to gear hobbing by the cutter provided in this disclosure for ROV propeller gear modification has a gear precision up to precision grade 6 as required by GB2363-90. The planetary wheel processed by the cutter provided in the disclosure for ROV propeller gear modification has a gear precision up to precision grade 6 as required by GB2363-90. The tooth ring is cut using a high precision and slow speed wire cutting method and the gear precision thereof meets precision grade 5 as required by GB2363-90.

The disclosure is not limited to the embodiments illustrated above. Variations made by those ordinary skilled in the art under the enlightenment in the disclosure, which are identical or equivalent to the solutions in this disclosure whether any changes in its shape or structure are made, shall fall within the scope of protection as defined by claims of this application. The term "first", "second", and "third" are applied for descriptive purpose only and are not intended to be interpreted as indicating or implying relative importance. The term "a plurality of' means two or more, unless otherwise specified.

## Claims

1. A cutter for ROV propeller gear modification, comprising a cut holder and a hob provided on the cut holder, **characterized in that**, the hob comprises continuous linearly arranged hobbings, wherein each hobbing has a tooth depth of 1.65cm in which a tooth dedendum is 0.975cm and a tooth addendum is 0.675cm, and has a tooth thickness of 0.946cm, an addendum circle radius of 0.324cm, a dedendum circle radius of 0.163cm, and a dextrorotatory tooth thread with a lead angle of 1°7'18", each two adjacent gear teeth having a tooth pitch of 1.885cm; and
wherein the hob has a modulus of 0.6, 12 slots, a pressure angle of 20°; a blade groove thereof has a spiral angle of 0° with a spiral direction being a straight flute; a base circle radius of the hob is 0.823cm and a base circle lead angle is 20°1'49"; the modified gear of ROV propeller is obtained by processing of the hobbings of the hob.

2. The cutter according to claim 1, **characterized in that** the hub is made of hard alloy and has a heat treatment hardness of HRC63-66; an adjacent pitch difference of chip pocket is 0.016cm with a chip pocket pitch cumulative error being 0.02cm, a tooth profile error is 0.003cm, a helix error of adjacent cutting edges is 0.004cm, a helix error of cutting edge in one round is 0.006cm and a helix error of cutting edge in three rounds is 0.01cm.

3. The cutter according to claim 1 or 2, **characterized in that** the modified gear of ROV propeller obtained through the hobbing processing has a modulus of 0.6, a pressure angle of 20 degrees, with 12 teeth, each tooth has an addendum circle diameter of 8.16 mm, a dedendum circle diameter of 5.85 mm, a dedendum height of 1.130 mm, and a true involute form diameter of 6.767 mm, and the left and the right tooth surfaces of each tooth have a drum shape, with the end edge of the left and right sides of the upper portion of the tooth being inclined inwardly by a preset angel.

4. The cutter according to claim 3, **characterized in that** the modified gear of ROV propeller obtained through the hob and gear processing is applicable to a solar wheel and planetary wheel.
